# EUROPÄISCHE PATENTSCHRIFT

(11) **EP 0 587 936 B1**
(45) Veröffentlichungstag und Bekanntmachung des Hinweises auf die Patenterteilung: **04.12.1996**
(21) Anmeldenummer: 92115962.0
(22) Anmeldetag: 17.09.1992
(51) Int. Cl.: G05B 19/042

(54) **Steuergerät, insbesondere zur Verwendung in einem Kraftfahrzeug**
Control device, particularly for use in a motor vehicle
Appareil de commande, spécialement pour utilisation dans un véhicule

(43) Veröffentlichungstag der Anmeldung: 23.03.1994
(73) Patentinhaber: SIEMENS AKTIENGESELLSCHAFT, 80333 München (DE)
(72) Erfinder: Bönisch, Günter, Dipl.-Ing. (FH), W-8402 Neutraubling (DE)

(56) Entgegenhaltungen:
- EP-A- 0 048 825
- EP-A- 0 455 174
- WO-A-89/00641

## Beschreibung

Die Erfindung betrifft ein Steuergerät nach dem Oberbegriff von Anspruch 1. Ein solches Steuergerät kann z.B. in einem Kraftfahrzeug als Motorsteuergerät dienen, mit dem die Zündung, die Einspritzung, die Lambdaregelung, der Leerlauffüllungssteller und dergleichen gesteuert oder geregelt werden. Es kann aber auch zum Steuern eines automatischen Getriebes oder zur Antiblockier- oder Antischlupf-Regelung eingesetzt werden.

Ein bekanntes Steuergerät für eine Brennkraftmaschine (EP-A-0 455 174) arbeitet nach einem Verfahren, das die Verarbeitung von in einem programmierbaren Festwertspeicher abgelegten Daten mit einfacher indirekter Adressierung ermöglicht. Dieses sehr zweckmäßige Verfahren wird auch bei dem vorliegenden Steuergerät verwendet.

Ein anderes bekanntes Steuergerät für Kraftfahrzeugmotoren weist ebenfalls einen frei programmierbaren Festwertspeicher auf (EP 0 360 826 B1). In diesen Speicher werden fahrzeugspezifische Daten, die Kennungen der Daten sowie Adreßzeiger eingegeben. Das Steuergerät ist sehr aufwendig aufgebaut, es weist insbesondere zwei vollständige Bussysteme auf.

Aus Gründen der Produkthaftung sollten Steuerdaten für Kraftfahrzeuge, insbesondere Kennfelddaten für Motoren gesichert sein. Insbesondere ist es erforderlich, daß sich eine Manipulation von Kennfelddaten eindeutig nachweisen läßt. Es ist allgemein bekannt, Daten gegen Fehler bei der übertragung oder Speicherung durch die Bildung von Prüf-oder Checksummen zu sichern. Ein derartiges Sichern der Daten eines Kennfeldes erschwert allerdings die nachträgliche Änderung von Kennfelddaten.

Der Erfindung liegt die Aufgabe zugrunde, ein Steuergerät zu schaffen, bei dem sich die nichtautorisierte Änderung von Daten, insbesondere von Kraftfahrzeug-Kennfelddaten eindeutig nachweisen läßt, bei dem aber auch einzelne Datenbereiche ohne weiteres nachprogrammiert oder geändert werden können.

Diese Aufgabe wird erfindungsgemäß durch das Steuergerät nach Anspruch 1 gelöst.

Zweckmäßige Weiterbildungen der Erfindung sind in den Unteransprüchen niedergelegt.

Ein Ausführungsbeispiel der Erfindung wird am folgenden anhand der Zeichnung erläutert. Es zeigen:
- Figur 1: ein Blockschaltbild eines erfindungsgemäßen Steuergeräts und einer zugehörigen Programmierstation,
- Figur 2: die Struktur eines gespeicherten gesamten Kennfeldbereiches,
- Figur 3: der Aufbau eines Teildatensatzes des Kennfeldbereiches nach Figur 2,
- Figur 4: bis Figur 6 Ablaufdiagramme der Berechnung der Prüfsummen durch das Steuergerät nach Figur 1, und
- Figur 7: und Figur 8 Ablaufdiagramme der Überprüfung der Prüfsummen durch das Steuergerät nach Figur 1.

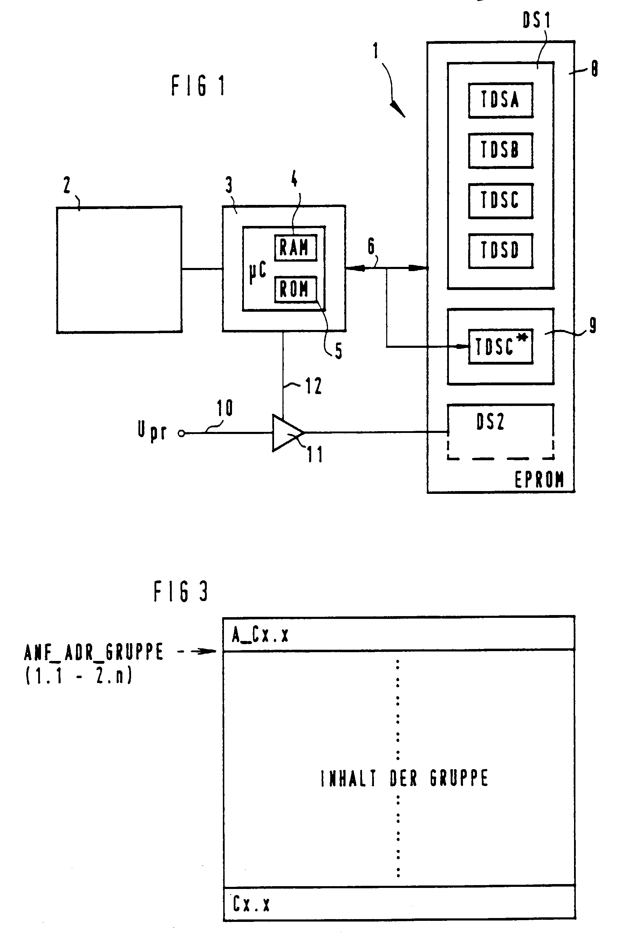

Ein Steuergerät 1, das mit einem angeschlossenen Programmiergerät 2 dargestellt ist (Figur 1) enthält einen Mikrocomputer 3, der einen Schreib-Lese-Speicher 4 als Arbeitsspeicher und einen Festwertspeicher 5, in dem das Steuergeräteprogramm gespeichert ist.

Der Mikrocomputer 3 ist über einen Bus 6 mit einem programmierbaren Festwertspeicher 8 verbunden, in dem die von dem Mikrocomputer 3 zu verarbeitenden Daten abgelegt sind. Der Festwertspeicher 8 ist als EPROM-Baustein ausgebildet und wird im folgenden auch als EPROM bezeichnet. Die Daten sind in ihm in strukturierter Form abgelegt. Ein erster Datensatz DS1 weist mehrere Teildatensätze DSA bis DSD auf. Der Teildatensatz TDSA enthält z.B. Daten zum Steuern der Einspritzung, der Teildatensatz TDSB die Daten zum Steuern der Zündung, der Teildatensatz TDSC die Daten zum Steuern der Lambdaregelung usw. Die Anzahl der Teildatensätze ist nicht auf die vier beschränkt, die in der vereinfachten Zeichnung dargestellt sind.

Ein zweiter - und gfs. weitere - Datensatz DS2 enthält ebenfalls einen oder mehrere - hier nicht dargestellte - Teildatensätze.

Eine Programmierspannung Uₚᵣ, die den für das Einschreiben von Daten in einen EPROM-Baustein erforderlichen Wert von etwa 11,5 bis 14 V aufweist, wird über eine Leitung 10 und einen Schalter 11, wenn dieser geschlossen ist, an den EPROM angelegt. Der Schalter 11 wird durch den Mikrocomputer 3 über eine Leitung 12 gesteuert. Von dem Programmiergerät (oder Programmierstation) 2 vorgegebene Daten gelangen bei einer Programmierung oder Nachprogrammierung über den Mikrocomputer 3 und den Bus 6 zu dem EPROM-Speicher 8 und werden dort mit der Spannung Uₚᵣ in den jeweiligen Speicherplatz eingeschrieben.

Der EPROM 8 weist auch einen Freiraum 9 auf, d.h. einen Speicherbereich, in den noch keine Daten eingeschrieben sind. In diesen Bereich werden im Wege der Nachprogrammierung geänderte Teildatensätze eingeschrieben, hier z.B. ein Teildatensatz TDS∗, der den Teildatensatz TDS ersetzt. Einzelheiten hierzu werden weiter hinten erläutert.

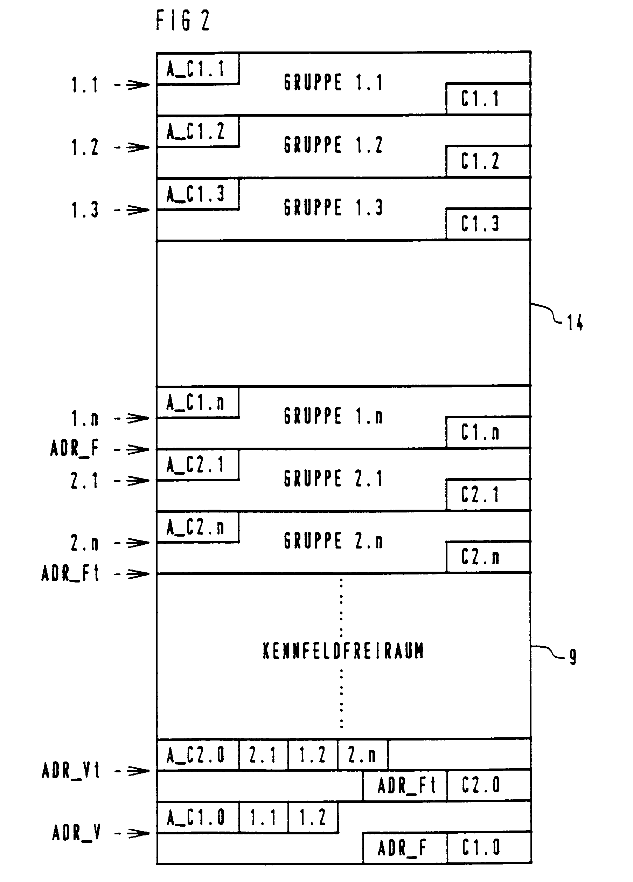

Aus Figur 2 ist die Struktur oder Aufteilung des gesamten Kennfeldbereiches 14, d.h. der in dem EPROM 8 gespeicherten Kraftfahrzeug-Kennfelddaten, ersichtlich. Darin bedeuten:
- 1.1,...2.n:: Anfangsadresse einer Gruppe, wobei 1.x = Bandprogrammierung und 2.x = Nachprogrammierung bedeuten
- ADR_V :: Anfangsadresse des Adreßverteilers (Bandprogrammierung)
- ADR_Vt :: Anfangsadresse des Adreßverteilers (Nachprogrammierung)
- A_Cx.x :: Adreßverweis auf die Checksumme der Gruppe x.x, der Adreßverweis steht direkt vor der Anfangsadresse der Gruppe
- Cx.x :: Checksumme für Gruppe x.x
- ADR_F :: Anfangsadresse des Freiraumbeginns (Bandprogrammierung)
- ADR_Ft :: Anfangsadresse des Freiraumbeginns (Nachprogrammierung).

Unter "Bandprogrammierung" wird hier die Vervollständigung des Steuergeräts beim Kraftfahrzeug-Hersteller, und zwar im Endbereich des Montagebandes, verstanden. Das Steuergerät wird bei dem Lieferanten mit dem Steuergeräteprogramm, aber nicht mit den Daten, versehen und an den Kraftfahrzeug-Hersteller geliefert. Dieser gibt dann in einer Programmierstation oder Programmiergerät 2, das z.B. aus einem Personal-Computer besteht, in das Steuergerät 1, d.h. in den EPROM 8, den Datensatz ein, der dem jeweiligen Kraftfahrzeug entspricht. Die Datensätze unterscheiden sich z.B. für Kraftfahrzeuge mit Automatikgetriebe, mit Klimaanlage usw. Da die Datensätze in Teildatensätze unterteilt sind, braucht der Hersteller in der Programmierstation nur die einzelnen Teildatensätze zu speichern und er kann sie dann zu dem jeweils erforderlichen Datensatz zusammenstellen. Dadurch ist ein erheblich geringerer Speicherplatz erforderlich als wenn für jedes Kraftfahrzeugmodell ein kompletter Datensatz gespeichert ist.

In dem Kennfeldbereich 14 (Figur 2) entspricht der obere Bereich, der mit dem Adreßverweis A_C1.1 beginnt und mit der Checksumme C1.n endet, dem ersten Datensatz DS1 von Figur 1. Die den ersten Teil des Kennfeld-Freiraums 9 einnehmenden Daten, die mit dem Adreßverweis A_C2.1 beginnen und mit der Checksumme C2.n enden (Figur 2), stellen zwei nachprogrammierte Datensätze TDSA∗ und TDSB∗ dar. Eine Nachprogrammierung wird in der Regel in einer Kraftfahrzeugwerkstatt als Kundendienstmaßnahme durchgeführt. Stellt sich z.B. heraus, daß die Leerlaufdrehzahl des Motors nicht innerhalb der vorgeschriebenen Grenzen liegen, so wird sie durch Nachhprogrammieren eines Teildatensatzes korrigiert.

Wie bereits erwähnt, wird jeder Teildatensatz durch eine eigene Prüf- oder Checksumme gesichert. Dazu werden folgende Bedingungen beachtet und Verfahrensschritte durchgeführt:
- Der Adreßverweis A_Cx.x auf die jeweilige Checksumme steht direkt vor der Anfangsadresse x.x einer Gruppe.
- Der Bereich, über den für eine Gruppe x.x die Checksumme gebildet wird, beginnt bei dem Adreßverweis A_Cx.x (einschließlich) und endet bei der Checksumme Cx.x (ohne Cx.x).
- Jede Gruppe wird durch eine Referenz-Checksumme eindeutig verifiziert, d.h. jeder Teildatensatz erhält eine eindeutige Checksumme, an der er identifiziert werden kann.
- Sowohl jeder an dem Bandende programmierte Datensatz als auch jeder nachprogrammierte Teildatensatz werden mit eindeutigen Checksummen versehen.
- Die Checksumme wird bei der Bandprogrammierung und bei der Nachprogrammierung nach dem gleichen Datensicherungsverfahren berechnet.
- Alle Gruppen weisen untereinander den gleichen Aufbau auf.
- Es werden immer nur die aktuellen Daten geprüft, d.h. nicht verwendete Daten werden ignoriert. Dadurch können sog. Scheinfehler nicht auftreten.
- Das zur Checksummenbildung verwendete Verfahren läßt sich in einfacher Weise erweitern.
- Der Gruppenaufbau bei der Bandprogrammierung unterscheidet sich nicht von dem Gruppenaufbau bei der Nachprogrammierung.
- Der Speicherbedarf bei dem Programmiergerät am Bandende ist gering. Unterscheiden sich z.B. zwei Datensätze A und B, die jeweils aus 10 Gruppen bestehen, nur in einer Gruppe, müssen in dem Programmiergerät nur neun identische Gruppen und zwei sich unterscheidende Gruppen bereitgestellt werden. Mit einer entsprechenden Auswahlvorschrift wird dann jeweils der Datensatz A oder der Datensatz B zusammengestellt.

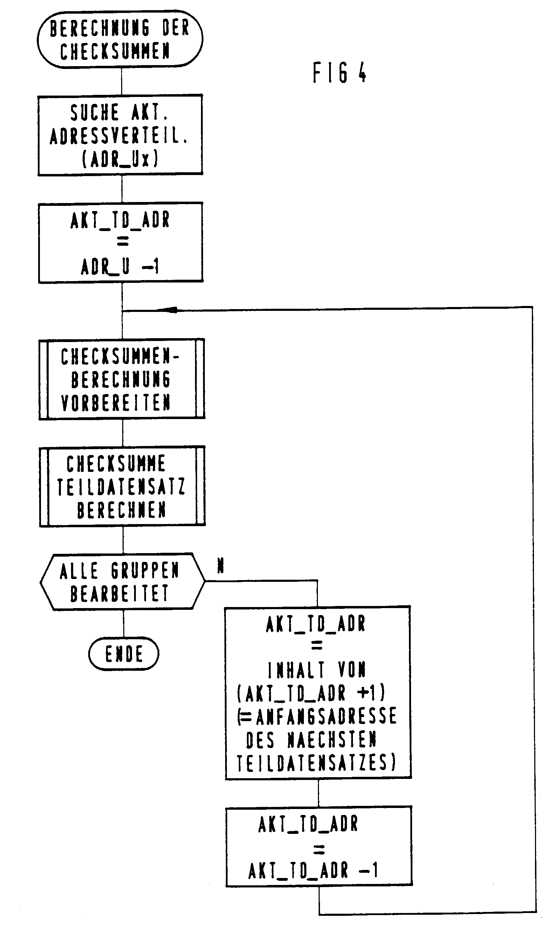

Aus Figur 3 ist der Aufbau eines Teildatensatzes, z.B. des Teildatensatzes TDSA, im einzelnen ersichtlich. Darin bedeutet ANF_ADR_Gruppe die Anfangsadresse einer Gruppe, z.B. der Gruppen 1.1 bis 2.n. Die anderen Abkürzungen sind bei Figur 2 bereits erläutert worden.

Der Inhalt einer Gruppe ist folgender (wahlweise):
- Versions-Infofeld, d.h. Verwaltungsinformationen, z.B. der Name, das Erstellungsdatum, die Strukturierung der Gruppe und dergleichen.
- Applikationskorrekturen, das sind Daten, die während der Applikations- oder Anpassungsphase benötigt werden, um z.B. eine Einspritzzeit zu ändern. Bei einem serienmäßigen Steuergerät sind diese Daten neutralisiert.
- Konstanten im Byte-Format.
- Konstanten im Word-Format.
- Kennfelder oder Tabellen einschließlich Stützstellen.
- Adreßverteiler, die die Stelle festlegen, an der jeder Teildatensatz im Speicher abgelegt ist.

Ein Adreßverweis ist jeweils 1 Word = 2 Byte groß oder lang. Die Checksumme wird hier folgendermaßen gebildet: Es wird eine 8-Bit-Addition von Bytes zu einer 16-Bit-Checksumme ohne Überlauf gebildet. Die Größe der Checksumme beträgt somit auch 1 Word. Die Bildung der Checksumme kann aber auch auf anderen bekannten Datensicherungsverfahren beruhen. Eine Checksumme Cx.x stellt die Summe des Inhalts des Adreßverweises A_Cx.x plus den Inhalt der Gruppe dar.

Der Kennfeld-Freiraum 9, der mit der Anfangsadresse ADR_F oder ADR_Ft beginnt und bis zu dem Adreßverweis auf die Checksumme des Adreßverteilers reicht, wird nicht mit einer Checksumme versehen.

Der Verweis auf die Freiraum-Anfangsadresse im Adreßverteiler wird nicht als Anfangsadresse einer Gruppe interpretiert.

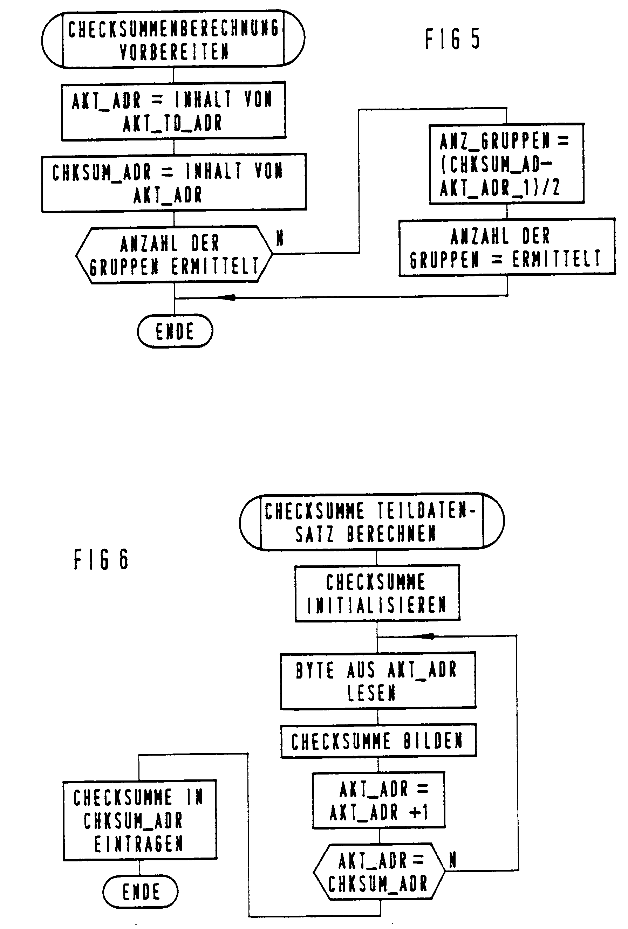

Aus Figur 5 ist das Ablaufdiagramm der Berechnung der Checksummen durch das Steuergerät ersichtlich. Neben den schon beschriebenen Bezugszeichen und Formelgrößen, sind darin:
- ANZ_GRUPPEN: die Anzahl der Teildatensätze
- AKT_ADR: die aktuelle Adresse in einem Datensatz
- CHKSUM_ADR: die Adresse der Checksumme eines Teildatensatzes und
- AKT_TD_ADR: die aktuelle Anfangsadresse eines Teildaten satzes

Die Figuren 5 und 6 enthalten Unterprogramme des Ablaufdiagramms nach Figur 4, und zwar die Vorbereitung der Checksummenberechnung (Fig. 5) und die Berechnung der Checksumme eines Teildatensatzes (Fig. 6).

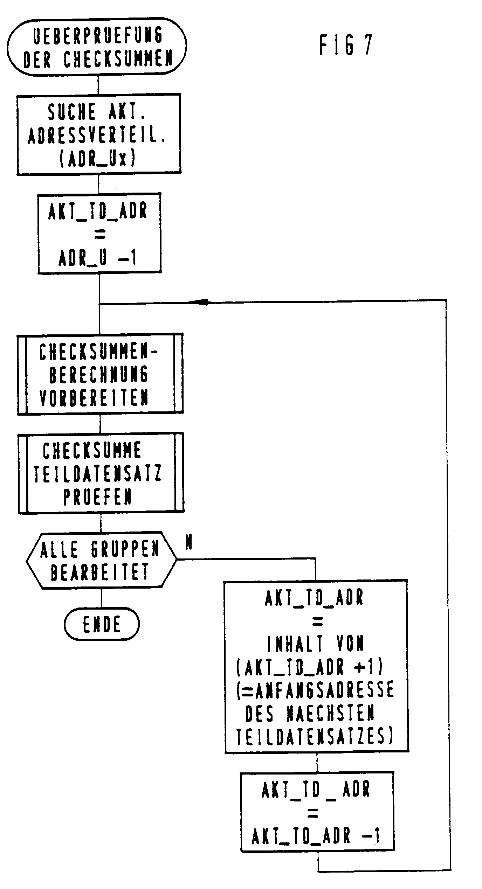

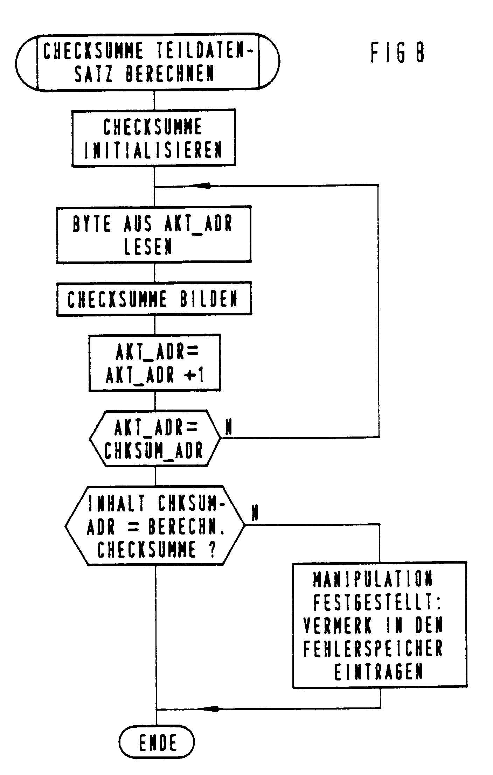

Aus Figur 7 ist das Ablaufdiagramm für eine Überprüfung der Checksummen durch das Steuergerät ersichtlich. Das darin enthaltene Unterprogramm für die Vorbereitung der Checksummenberechnung entspricht dem von Figur 5. Ein weiteres Unterprogramm für die Prüfung der Checksumme eines Teildatensatzes ist in Figur 8 dargestellt.

Die Ablaufdiagramme nach den Figuren 4 bis 8 geben die vorstehend beschriebene Funktionsweise des Steuergeräts 1 im einzelnen wieder und sie sind darüberhinaus selbsterklärend.

Mit dem beschriebenen Steuergerät wird eine gute Ausnutzung der Speicherkapazität des programmierbaren Festwertspeichers (EPROM) 8 erreicht und es läßt sich jede unbefugte Änderung der in einem Kraftfahrzeug-Steuergerät gespeicherten Daten sicher nachweisen.

## Patentansprüche

1. Steuergerät, insbesondere zur Verwendung in einem Kraftfahrzeug, mit einem Mikrocomputer (3), einem das Steuergeräte-Programm enthaltenden Festwertspeicher (5), einem als Arbeitsspeicher dienende Schreib-Lese-Speicher (4) und einem die zu verarbeitenden Daten enthaltenden programmierbaren Festwertspeicher (8),
**dadurch gekennzeichnet**,
- daß die Daten in dem programmierbaren Festwertspeicher (8) in Form von in Teildatensätzen (TDSA,..., TDSD) unterteilten Datensätzen (DS1,..., DSn) abgelegt sind,
- daß die Teildatensätzen (TDSA,..., TDSD) einzeln über Adreßverteiler adressierbar sind,
- daß jeder Teildatensatz durch eine Prüfsumme (C1.1,..., C2.n) gesichert ist, und
- daß jeder Teildatensatz einen Adreßverweis (ACx.x) auf die jeweilige Prüfsumme (C1.1,..., C2.n) enthält.

2. Steuergerät nach Anspruch 1, dadurch gekennzeichnet, daß jeder Teildatensatz den Adreßverweis (ACx.x) auf seine Prüfsumme (C1.1,...,C2.n) vor seiner Anfangsadresse (ANF_ADR_x.x) enthält.

3. Steuergerät nach Anspruch 1, dadurch gekennzeichnet, daß der programmierbare Festwertspeicher (8) einen Freiraum (10) aufweist, in den bei einer Nachprogrammierung der zu verarbeitenden Daten einzelne geänderte Teildatensätze (TDSA*,..., TDSD∗) eingeschrieben werden, und daß die Adresse eines zu ersetzenden Teildatensatzes in dem Adreßverteiler durch die Adresse des entsprechenden geänderten Teildatensatzes ersetzt wird.

4. Steuergerät nach Anspruch 1, dadurch gekennzeichnet, daß der programmierbare Festwertspeicher (8) einen Kennfeldbereich (14) aufweist, der in zwei Teile unterteilt ist, von denen der erste Teil in Gruppen (1.1,...,2.n) unterteilt und der zweite Teil als Freiraum (9) ausgebildet ist.

5. Steuergerät nach Anspruch 4, dadurch gekennzeichnet, daß eine Gruppe aus Konstanten, Kennfelder oder Tabellen mit zugehörigen Stützstellen oder aus einem Adreßverteiler besteht.

6. Steuergerät nach Anspruch 4, dadurch gekennzeichnet, daß der Adreßverweis (A_Cx.x) auf die Prüfsumme (Cx.x) einer Gruppe (x.x), die Gruppe und die Prüfsumme der Gruppe jeweils einen Teildatensatz (TDSx) bilden.

## Claims

1. Control device, in particular for use in a motor vehicle, having a microcomputer (3), a read-only memory (5) which contains the control device program, a read-write memory (4) which serves as main memory and a programmable read-only memory (8) which contains the data to be processed, characterized
- in that the data in the programmable read-only memory (8) are stored in the form of data sets (DS1, DSn) divided up into sub-data sets (TDSA, ..., TDSD),
- in that the sub-data sets (TDSA, ..., TDSD) can be addressed individually via address distributors,
- in that each sub-data set is protected by a check sum (C1.1, ..., C2.n), and
- in that each sub-data set contains an address reference (ACx.x) for the respective check sum (C1.1, ..., C2.n).

2. Control device according to Claim 1, characterized in that each sub-data set contains the address reference (ACx.x) for its check sum (C1.1, .... C2.n) before its starting address (ANF_ADR_xx).

3. Control device according to Claim 1, characterized in that the programmable read-only memory (8) has a free space (10) into which individually modified sub-data sets (TDSA* ..., TDSD*) are written during subsequent programming of the data to be processed, and in that the address of a sub-data set to be replaced is replaced in the address distributor by the address of the corresponding modified sub-data set.

4. Control device according to Claim 1, characterized in that the programmable read-only memory (8) has a characteristic diagram area (14) which is divided into two parts, the first part of which is divided into groups (1.1, ..., 2.n) and the second part is constructed as a free space (9).

5. Control device according to Claim 4, characterized in that a group consists of constants, characteristic diagrams or tables with associated interpolation points, or of an address distributor.

6. Control device according to Claim 4, characterized in that the address reference (A_Cx.x) for the check sum (Cx.x) of a group (x.x), the group and the check sum of the group each form a sub-data set (TDSx).

## Revendications

1. Appareil de commande, en particulier pour utilisation dans un véhicule à moteur, comportant un micro-ordinateur (3), une mémoire de valeurs constantes (5) contenant le programme de l'appareil de commande, une mémoire d'écriture et de lecture (4) servant de mémoire de travail et une mémoire de valeurs constantes (8) programmable, contenant les données à traiter,
caractérisé en ce que
- les données dans la mémoire de valeurs fixes (8) programmable sont stockées sous la forme de jeux de données (DS1,..., DSn) divisées en jeux partiels de données (TDSA, ..., TDSD),
- les jeux partiels de données (TDSA, ..., TDSD) sont adressables individuellement au moyen d'un répartiteur d'adresse,
- chaque jeu partiel de données est garanti par une somme de contrôle (C1.1 ..., Cn.n),
- chaque jeu partiel de données contient un repère d'adresse (ACx.x) correspondant à chaque somme de contrôle (C1.1, ... ,Cn.n) correspondante.

2. Appareil de commande suivant la revendication 1, caractérisé en ce que chaque jeu partiel de données contient, devant son adresse de début (ANF_ADR_x.x), le repère d'adresse (ACx.x) correspondant à sa somme de contrôle (C1.1, ..., Cn.n) .

3. Appareil de commande suivant la revendication 1, caractérisé en ce que la mémoire de valeurs constantes (8) programmable présente un espace libre (9), dans lequel, au cours d'une reprogrammation des données à traiter, différents jeux partiels de données modifiés 'TDSA*, ..., TDSD*) sont enregistrés, et en ce que, dans le répartiteur d'adresse, à l'adresse d'un jeu partiel de données à remplacer est substituée l'adresse du jeu partiel de données modifié correspondant.

4. Appareil de commande suivant la revendication 1, caractérisé en ce que la mémoire programmable (8) de valeurs constantes présente un champ de caractéristiques (14) qui est divisé en deux parties, dont la première est divisée en groupes (1.1, ..., 2.n) et la deuxième est réalisée sous la forme d'un espace libre (9).

5. Appareil de commande suivant la revendication 4, caractérisé en ce qu'un groupe est constitué de constantes, champs de caractéristiques ou tableaux comportant des positions de protection associées, ou d'un répartiteur d'adresses.

6. Appareil de commande suivant la revendication 4, caractérisé en ce que le repère d'adresse (A_Cx.x) d'un groupe, correspondant à la somme de contrôle (Cx.x) d'un groupe (x.x), le groupe et la somme de contrôle du groupe, forment un jeu partiel de données (TDSx).
